# EUROPEAN PATENT SPECIFICATION

(11) **EP 4 376 193 B1**
(45) Date of publication and mention of the grant of the patent: **11.02.2026**
(21) Application number: 22918372.8
(22) Date of filing: 14.12.2022
(51) Int. Cl.: H01M 50/30, H01M 50/10

(54) **GAS DISCHARGE DEVICE, BATTERY CELL, BATTERY, AND ELECTRIC DEVICE**
GASENTLADUNGSVORRICHTUNG, BATTERIEZELLE, BATTERIE UND ELEKTRISCHE VORRICHTUNG
DISPOSITIF DE DÉCHARGE DE GAZ, ÉLÉMENT DE BATTERIE, BATTERIE ET DISPOSITIF ÉLECTRIQUE

(30) Priority: 05.01.2022 CN 202220015801 U
(43) Date of publication of application: 29.05.2024
(73) Proprietor: Contemporary Amperex Technology (Hong Kong) Limited, Central, Central And Western District (HK)
(72) Inventor: DENG, Gao, Ningde, Fujian 352100 (CN); CHEN, Yuefei, Ningde, Fujian 352100 (CN); MENG, Wanqiu, Ningde, Fujian 352100 (CN); ZHANG, Xiaoxi, Ningde, Fujian 352100 (CN); XUE, Longfei, Ningde, Fujian 352100 (CN)
(74) Representative: Lorenz Seidler Gossel Part. mbB
(86) International application number: PCT/CN2022/138888
(87) International publication number: WO 2023/130924

(56) References cited:
- CN-A- 109 904 367
- CN-A- 113 611 960
- CN-U- 212 062 539
- CN-U- 212 062 539
- CN-U- 216 698 634
- US-A1- 2017 077 566
- US-A1- 2018 097 214

## Description

This application claims priority to Chinese Patent Application No. 202220015801.5, filed on January 05, 2022 and entitled "DEGASSING APPARATUS, BATTERY CELL, BATTERY, AND ELECTRIC APPARATUS".

### TECHNICAL FIELD

This application relates to the field of battery technologies, and in particular, to a degassing apparatus, a battery cell, a battery, and an electric apparatus.

### BACKGROUND

Batteries are widely used in electronic devices such as mobile phones, laptops, battery carts, electric vehicles, electric aircrafts, electric ships, electric toy cars, electric toy ships, electric toy aircrafts, and electric tools.

In the development of battery cell technology, in addition to performance improvement of battery cells, safety is another issue that needs to be considered. Therefore, how safety of battery cells is improved is a problem to be solved urgently in battery cell technology. CN 212 062 539 U discloses an explosion-proof valve and US 2017/077566 A1 discloses a traction battery assembly with a vent port.

### SUMMARY

Embodiments of this application provide a degassing apparatus, a battery cell, a battery, and an electric apparatus, which can improve safety of the battery cell during operation.

According to a first aspect, an embodiment of this application provides a degassing apparatus applied to a battery cell. The degassing apparatus includes: a degassing body; a breathable member disposed at the degassing body; and a protection member disposed at the degassing body and located on a side of the breathable member back away from an electrode assembly of the battery cell. The protection member is provided with a first through-hole, and a gas channel in communication with the first through-hole is formed between the breathable member and the protection member. The breathable member is configured for gas to pass through when pressure of the gas in the battery cell reaches a first threshold, such that the gas passes through the gas channel and the first through-hole to be discharged outside the battery cell. A projection of the first through-hole in an axial direction and a projection of the breathable member in the axial direction are staggered.

In the degassing apparatus provided in this embodiment of this application, as the protection member includes the first through-hole and the projection of the first through-hole in the axial direction and the projection of the breathable member in the axial direction are staggered, external impurities are less likely to fall on the breathable member directly after passing through the first through-hole, reducing the possibility that the external impurities damage the breathable member after entering the degassing apparatus, thus effectively improving the safety of the battery cell during operation.

According to the invention, the degassing body is provided with a second through-hole in communication with the inside of the battery cell, a projection of the second through-hole in the axial direction and the projection of the first through-hole in the axial direction are staggered. In some embodiments, the breathable member is at least partially accommodated in the second through-hole, allowing the gas to directly flow into the gas channel via the breathable member. This can further reduce the risk of the external impurities of the battery cell causing contamination and clogging of the breathable member, thus improving the safety of the battery cell during operation.

In some embodiments, the breathable member covers the second through-hole, allowing the gas to flow into the gas channel through the second through-hole via the breathable member. Such arrangement can still protect the breathable member and reduce the risk that the external impurities damage the breathable member after entering the degassing apparatus.

According to the invention, a surface of the degassing body back away from the electrode assembly is provided with a depression, a bottom surface of the depression includes a first region and a second region, the first through-hole and the first region are disposed opposite each other in the axial direction, and the second through-hole is disposed in the second region. Through such arrangement, the gas channel may be provided in the depression without occupying a space outside the degassing body. This can improve the structural compactness of the degassing apparatus and reduce the possibility that the external impurities directly come into contact with the breathable member after entering the degassing apparatus.

In some embodiments, the depression is provided with a step surface, the protection member is at least partially accommodated in the depression, and the step surface is used to support the protection member. This can reduce the height by which the protection member exceeds the surface of the degassing body, further improving the structural compactness of the degassing apparatus.

According to the invention, a protrusion is provided in the second region, the protrusion surrounds the second through-hole, and the protection member is apart from the protrusion in the axial direction. In some embodiments, the breathable member is attached to a top surface of the protrusion. Such arrangement facilitates storage of the external impurities, in a groove structure, after entry into the degassing apparatus, where the groove structure is enclosed jointly by the protrusion, an inner wall of the depression, and the first region. In addition, the breathable member is attached to the top surface of the protrusion, which is more conducive to mounting the breathable member.

In some embodiments, the second through-hole extends from the top surface of the protrusion and runs through the degassing body. Such arrangement is more conducive to processing the degassing body.

In some embodiments, the degassing apparatus further includes a reinforcing member sandwiched between the breathable member and the protection member, the reinforcing member is provided with a third through-hole, and the third through-hole communicates with the first through-hole and the second through-hole. The provision of the reinforcing member can improve stability of connection between the breathable member and the top surface of the protrusion.

In some embodiments, a gap s between the breathable member and the protection member satisfies 0.2 mm≤s≤0.8 mm; and/or a height h by which the protrusion exceeds the bottom surface of the depression satisfies 1 mm≤h≤1.5 mm; and/or a diameter d₁ of the protection member and an outer diameter d₂ of the protrusion satisfy 1<d₁/d₂≤2.5.

According to a second aspect, an embodiment of this application provides a battery cell including a housing with an opening; an electrode assembly accommodated in the housing; an end cover covering the opening of the housing; and the degassing apparatus according to any one of the foregoing embodiments, the degassing apparatus being disposed at the housing or end cover.

According to a third aspect, an embodiment of this application provides a battery including the battery cell provided in the foregoing embodiment.

According to a fourth aspect, an embodiment of this application provides an electric apparatus including the battery provided in the foregoing embodiment, where the battery is configured to supply electrical energy.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery module in a battery according to an embodiment of this application;
FIG. 4 is a schematic structural diagram of a battery cell according to an embodiment of this application;
FIG. 5 is a locally enlarged view of position A in FIG. 4;
FIG. 6 is a front view of a degassing apparatus being mounted at an end cover according to an embodiment of this application;
FIG. 7 is a schematic structural cross-sectional view along N-N in FIG. 6 according to an embodiment;
FIG. 8 is a schematic structural cross-sectional view along N-N in FIG. 6 according to another embodiment;
FIG. 9 is a schematic structural cross-sectional view along N-N in FIG. 6 according to still another embodiment;
FIG. 10 is a schematic structural cross-sectional view along N-N in FIG. 6 according to yet another embodiment; and
FIG. 11 is a locally enlarged view of position B in FIG. 10.

In the accompanying drawings, the figures are not necessarily drawn to scale.

Reference signs are described as follows:
1. vehicle; 1a. motor; 1b. controller;
10. battery; 11. bottom casing; 12. top casing;
20. battery module;
30. battery cell;
31. housing; 31a. opening; 32. electrode assembly; 33. end cover; 331. cover body; 332. electrode terminal;
34. degassing apparatus; 341. degassing body; 341a. second through-hole; 3411. depression; 3411a. first region; 3411b. second region; 3411c. step surface; 342. breathable member; 343. protection member; 343a. first through-hole; 344. protrusion; 345. reinforcing member; 345a. third through-hole; and
X. axial direction.

### DETAILED DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

It should be noted that, unless otherwise stated, the technical terms or scientific terms used in the embodiments of this application should be in the ordinary meaning as understood by persons skilled in the field to which the embodiments of this application belong.

In the description of the embodiments of this application, the orientations or positional relationships indicated by the technical terms "center", "longitudinal" "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the means or components mentioned must have specific orientations, or must be constructed or manipulated according to specific orientations, and therefore shall not be construed as any limitations on embodiments of this application.

In addition, the technical terms "first", "second", and the like are merely for the purpose of description, and shall not be understood as any indication or implication of relative importance or any implicit indication of the number of technical features indicated. In the description of the embodiments in this application, "a plurality of" means at least two unless otherwise specifically stated.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

In the description of the embodiments of the present application, unless otherwise clearly specified and defined, a first feature being "on" or "under" a second feature may mean that the first and second features are in direct contact, or the first and second features are in indirect contact through an intermediary. Moreover, that the first feature is "above", "over", or "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The battery cell in the application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes, which is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The positive electrode current collector includes a positive electrode current collecting portion and a positive electrode tab connected to the positive electrode current collecting portion. The positive electrode current collecting portion is coated with the positive electrode active substance layer, and the positive electrode tab is coated with no positive electrode active substance layer. With a lithium-ion battery as an example, its positive electrode current collector may be made of aluminum, and its positive electrode active substance layer includes a positive electrode active substance which may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The negative electrode current collector includes a negative electrode current collecting portion and a negative electrode tab connected to the negative electrode current collecting portion. The negative electrode current collecting portion is coated with the negative electrode active substance layer, and the negative electrode tab is coated with no negative electrode active substance layer. The negative electrode current collector may be made of copper, and the negative electrode active substance layer includes a negative electrode active substance which may be carbon, silicon, or the like. A material of the separator may be PP (polypropylene,), PE (polyethylene), or the like.

For the development of battery technologies, many design factors need to be considered, for example, performance parameters such as energy density, cycle life, discharge capacity, and charge and discharge rate, as well as safety of the battery.

Because a battery cell undergoes a plurality of charge and discharge cycles, side reactions are caused, and gas is continuously generated, causing certain pressure in the battery cell. An increase in the pressure impedes the timely discharging of the gas between electrode plates, affecting intercalation and deintercalation of lithium ions, thus resulting in a risk of lithium precipitation. To ensure the safety of the battery cell, a degassing apparatus is typically disposed in the battery cell, and the degassing apparatus is configured to exhaust the gas generated in the battery cell, thus ensuring the safety of the battery cell.

The inventors have found that even a degassing apparatus is disposed in the battery, during cycling of the battery cell, the risks of fire and explosion of the battery cell still exist. Then, they conducted systematic analysis and study on the structure and use environment of the battery cell. The inventors further have found that although the degassing apparatus is disposed in the battery cell, as the time of cycling operation of the battery cell increases, impurities outside the battery cell such as water and particles enter the battery cell and adhere to a breathable film of the degassing apparatus. The continuous accumulation of the impurities on the breathable film causes the breathable film to be subjected to corrosion, decomposition, and clogging as well as functional failure, severely impacting the normal degassing process of the battery cell, thus causing problems such as fire and explosion of the battery cell and severely impacting the safety of the battery cell during operation.

Based on the foregoing problems found by the inventors, they have improved the structure of the degassing apparatus in the battery cell. The technical solution described in the embodiments of this application is applicable to a degassing apparatus, a battery cell including such degassing apparatus, a battery including such battery cell, and an electric apparatus using such battery.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric apparatus being a vehicle is used as example for description of the following embodiments.

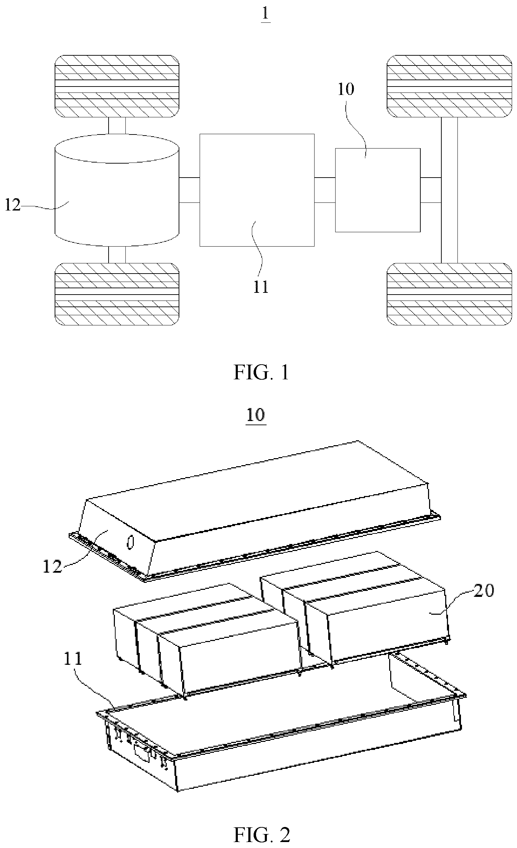

As shown in FIG. 1, a battery 10 is disposed in the vehicle 1. The battery 10 may be disposed at the bottom or in the front or at the rear of the vehicle 1. The battery 10 may be configured to supply power to the vehicle 1. For example, the battery 10 may be used as an operational power supply for the vehicle 1.

The vehicle 1 further includes a controller 1b and a motor 1a. The controller 1b is configured to control the battery 10 to supply power to the motor 1a, for example, to satisfy power needs of start, navigation, and driving of the vehicle 1.

In some embodiments of this application, the battery 10 can be used as not only the operational power source for the vehicle 1 but also a driving power source for the vehicle 1, replacing or partially replacing fossil fuel or natural gas to provide driving traction for the vehicle 1.

Referring to FIG. 2, the battery 10 includes a battery cell (not shown in FIG. 2). The battery 10 may further include a box accommodating the battery cell.

The box is configured to accommodate the battery cell, and the box may have various structures.

In some embodiments, the box may include a bottom casing 11 and a top casing 12. The bottom casing 11 and the top casing 12 fit each other. The bottom casing 11 and the top casing 12 jointly define an accommodating space for accommodating the battery cell 30. The bottom casing 11 and the top casing 12 may both be of a hollow structure with one side open. The opening side of the bottom casing 11 is engaged with the opening side of the top casing 12 to form the box with the accommodating space. A sealing member may be also disposed between the bottom casing 11 and the top casing 12 to achieve the sealing connection between the bottom casing 11 and the top casing 12.

In practical application, the bottom casing 11 may cover the top of the top casing 12. The bottom casing 11 may be further referred to as an upper box body, and the top casing 12 may be further referred to as a lower box body.

The bottom casing 11 and the top casing 12 may be of various shapes, such as a cylinder or a cuboid. In FIG. 2, for example, the bottom casing 11 and the top casing 12 are both of a cuboid structure.

There may be one or more battery cells in the battery 10. If a plurality of battery cells are provided, the plurality of battery cells may be connected in series, parallel, or series-parallel. Being connected in series-parallel means a combination of series and parallel connections between the plurality of battery cells. The plurality of battery cells may be directly connected in series, parallel, or series-parallel, and then an entirety composed of the plurality of battery cells is accommodated in the box. Alternatively, a battery module 20 may be formed by a plurality of battery cells being connected in series, parallel, or series-parallel. A plurality of battery modules 20 are then connected in series, parallel, or series-parallel to form an entirety which is accommodated in the box.

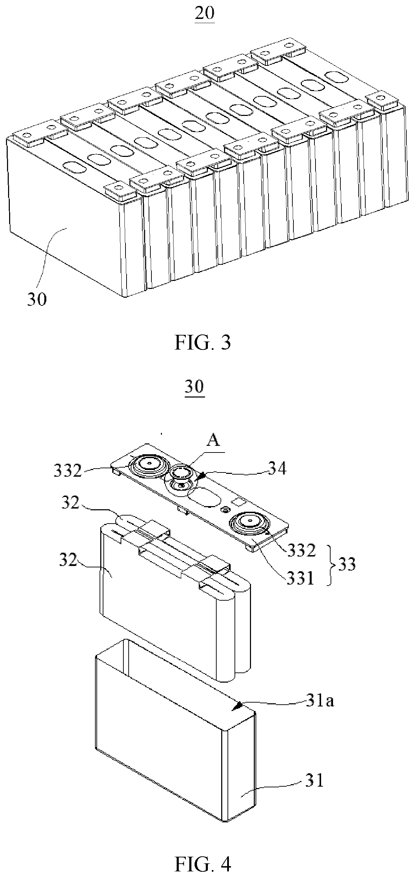

In some embodiments, as shown in FIG. 3, a plurality of battery cells 30 are provided in the battery module 20. The plurality of battery cells 30 are connected in series, parallel, or series-parallel to form the battery module 20. A plurality of battery modules 20 are then connected in series, parallel, or series-parallel to form an entirety which is accommodated in the box.

In some embodiments, the plurality of battery cells 30 in the battery module 20 may be electrically connected via a busbar, so that the plurality of battery cells 30 in the battery module 20 are connected in series, parallel, or series-parallel.

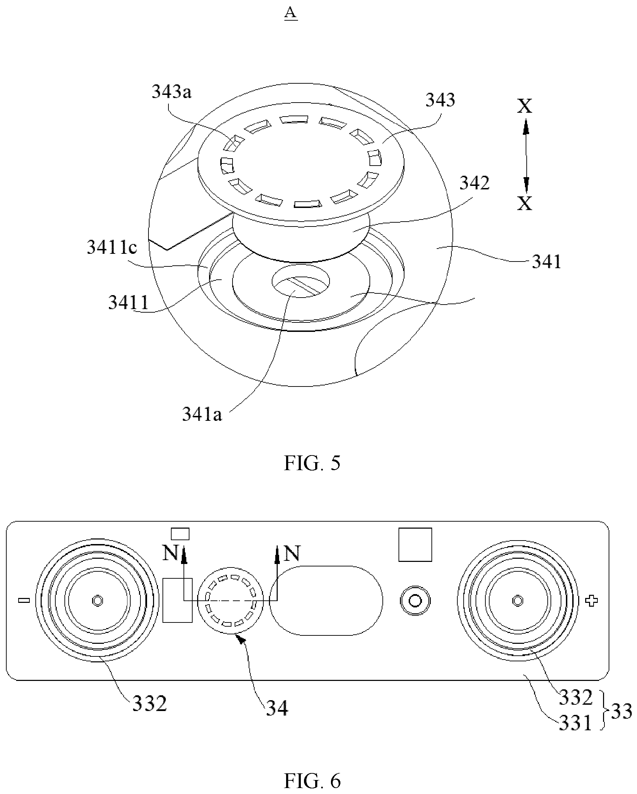

FIG. 4 is a schematic structural diagram of a battery cell according to an embodiment of this application, and FIG. 5 is a locally enlarged view of position A in FIG. 4.

As shown in FIG. 4, the battery cell 30 includes a housing 31, an electrode assembly 32, an end cover 33, and an adapting component. The housing 31 has an opening 31a. The electrode assembly 32 is accommodated in the housing 31. The electrode assembly 32 includes tabs. The end cover 33 includes a cover body 331, an electrode terminal 332, and an insulating member. The end cover 33 is configured to cover the opening 31a. The electrode terminal 332 is mounted on the cover body 331. The insulating member is located on a side of the end cover 33 facing the electrode assembly 32. The adapting component is configured to connect the electrode terminal 332 to the tab, thus allowing for electrical connection between the tab and the electrode terminal 332.

The housing 31 may be of various shapes, such as a cylinder or a cuboid. A shape of the housing 31 may be determined based on a specific shape of the electrode assembly 32. For example, if the electrode assembly 32 is of a cylinder structure, the housing 31 may be of a cylinder structure. If the electrode assembly 32 is of a cuboid structure, the housing 31 may be of a cuboid structure. In FIG. 4, for example, the housing 31 and the electrode assembly 32 are both of a cuboid structure.

The housing 31 may be made of various materials, such as copper, iron, aluminum, stainless steel, and aluminum alloy, which are not particularly limited in the embodiments of this application.

One or more electrode assemblies 32 may be accommodated in the housing 31. In FIG. 4, two electrode assemblies 32 may be accommodated in the housing 31.

In some embodiments, the electrode assembly 32 may further include a positive electrode plate, a negative electrode plate, and a separator. The electrode assembly 32 may be a wound structure formed by the positive electrode plate, the separator, and the negative electrode plate through winding. The electrode assembly 32 may alternatively be a laminated structure formed by the positive electrode plate, the separator, and the negative electrode plate through lamination.

The positive electrode plate may include a positive electrode current collector and a positive electrode active substance layer. The positive electrode active substance layer is applied onto the surface of the positive electrode current collector. The negative electrode plate may include a negative electrode current collector and a negative electrode active substance layer. The negative electrode active substance layer is applied onto the surface of the negative electrode current collector. The separator is between the positive electrode plate and the negative electrode plate and configured to separate the positive electrode plate from the negative electrode plate, to reduce a risk of a short circuit between the positive electrode plate and the negative electrode plate.

A material of the separator may be PP (polypropylene), PE (polyethylene), or the like.

The tabs in the electrode assembly 32 are a positive electrode tab and a negative electrode tab. The positive electrode tab may be a portion of the positive electrode current collector uncoated with the positive electrode active substance layer. The negative electrode tab may be a portion of the negative electrode current collector uncoated with the negative electrode active substance layer.

In this embodiment of this application, referring to FIGs. 4 and 5, the cover body 331 of the end cover 33 is configured to cover the opening 31a of the housing 31 to form a closed space accommodating the battery cell 30, where the closed space may be further used for accommodating an electrolyte such as a liquid electrolyte. The electrode terminal 332 of the end cover 33 is an output component delivering electrical energy from battery cell 30, and the end cover 33 may have one or two electrode terminals 332.

The housing 31 may have one or two openings 31a. If the housing 31 has one opening 31a, one end cover 33 may be provided. If the housing 31 has two openings 31a, two end covers 33 may be provided. The cover bodies 331 of the two end covers 33 respectively cover the two openings 31a.

In some embodiments, as shown in FIG. 4, the housing 31 has one opening 31a and one end cover 33 is also provided. Two electrode terminals 332 may be provided in the end cover 33. One electrode terminal 332 in the end cover 33 is electrically connected to one tab (the positive electrode tab) of the electrode assembly 32 via one adapting component. The other electrode terminal 332 in the end cover 33 is electrically connected to the other tab (the negative electrode tab) of the electrode assembly 32 via the other adapting component.

In some other embodiments, the housing 31 has two openings 31a. The two openings 31a are provided on two opposite sides of the housing 31. Two end covers 33 are provided. The two end covers 33 respectively cover the two openings 31a of the housing 31. In this case, the end cover 33 may include one electrode terminal 332. The electrode terminal 332 in one end cover 33 is electrically connected to one tab (the positive electrode tab) of the electrode assembly 32 via one adapting component; and the electrode terminal 332 in the other end cover 33 is electrically connected to the other tab (the negative electrode tab) of the electrode assembly 32 via the other adapting component.

According to a degassing apparatus 34 applied to the battery cell 30 in the embodiments of this application, as shown in FIGs. 4 and 5, the degassing apparatus 34 includes a degassing body 341, a breathable member 342, and a protection member 343. The breathable member 342 is disposed at the degassing body 341. The protection member 343 is disposed at the degassing body 341 and located on a side of the breathable member 342 back away from an electrode assembly 32 of the battery cell 30. The protection member 343 is provided with a first through-hole 343a, and a gas channel in communication with the first through-hole 343a is formed between the breathable member 342 and the protection member 343. The breathable member 342 is configured for gas to pass through when pressure of the gas in the battery cell 30 reaches a first threshold, such that the gas passes through the gas channel and the first through-hole 343a to be discharged outside the battery cell 30. A projection of the first through-hole 343a in an axial direction X and a projection of the breathable member 342 in the axial direction X are staggered.

Specifically, the breathable member 342 may be integrally formed with the degassing body 341, or separately processed and then mounted onto the degassing body 341. The breathable member 342 may be disposed at one end of the degassing body 341 close to the electrode assembly 32, at one end of the degassing body 341 away from the electrode assembly 32, or in a region between the two, which is not limited herein.

The material of the breathable member 342 is not limited as long as it allows the gas to pass through. For example, the material of the breathable member 342 includes one or more of polytetrafluoroethylene, PP spunbond non-woven fabric, and PE polymer breathable film. The breathable member 342 formed in this way has a function of allowing the gas to pass through and a waterproof function, which further reduces the possibility of functional failure of the breathable member 342.

The protection member 343 may be in a shape of a plate, an umbrella, or a hollow cylinder, or in other irregular shapes.

When the degassing apparatus 34 is used in the battery cell 30 and the pressure of the gas in the battery cell 30 reaches the first threshold, the gas in the battery cell 30 passes through the breathable member 342 and flows through the gas channel to be discharged outside the battery cell 30 via the first through-hole 343a.

The protection member 343 may be disposed in one side of the degassing body 341 away from the electrode assembly 32 or outside the degassing body 341. In addition, the protection member 343 and the degassing body 341 may be integrally formed or separately formed by processing and then assembled together.

It can be understood that one protection member 343 may be provided with one or more first through-holes 343a. The first through-hole 343a may be cylindrical, prismatic, annular, or the like. In an embodiment in which one protection member 343 is provided with a plurality of first through-holes 343a, the plurality of first through-holes 343a may be distributed in a circular array, a rectangular array, an annular array, or another irregular shape, which is not limited herein as long as the degassing function works.

The axial direction X of the first through-hole 343a may be the thickness direction of the degassing body 341 or may have an included angle with the thickness direction of the degassing body 341, which is not limited herein as long as the normal degassing function of the degassing apparatus 34 is ensured.

The projection of the first through-hole 343a in the axial direction X and the projection of the breathable member 342 in the axial direction X are staggered, meaning that the projections of the first through-hole 343a and the breathable member 342 in the axial direction X of the first through-hole 343a do not overlap or coincide, but are apart from each other.

When the pressure of the gas in the battery cell 30 does not reach the first threshold, the degassing apparatus 34 does not degas. In this case, impurities outside the battery cell 30 such as gas or particles may pass through the first through-hole 343a and enter the degassing apparatus 34. Because the orthographic projections of the first through-hole 343a and the breathable member 342 in the axial direction X are staggered, after the external impurities flow into the degassing apparatus along the axial direction X of the first through-hole 343a, they are less likely to fall onto the breathable member 342 directly but on other components than the breathable member 342. In this way, the external impurities are less likely to adhere to the breathable member 342, and thus are less likely to clog the breathable member 342 or cause other damages.

In the degassing apparatus 34 provided in this embodiment of this application, as the protection member 343 includes the first through-hole 343a and the projection of the first through-hole 343a in the axial direction X and the projection of the breathable member 342 in the axial direction X are staggered, external impurities are less likely to fall on the breathable member 342 directly after passing through the first through-hole 343a, reducing the possibility that the external impurities damage the breathable member 342 after entering the degassing apparatus 34, thus effectively improving the safety of the battery cell 30 during operation.

In some embodiments, the degassing body 341 is provided with a second through-hole 341a in communication with the inside of the battery cell 30, and an orthographic projection of the second through-hole 341a in the axial direction X and the projection of the first through-hole 343a in the axial direction X are staggered.

Specifically, the second through-hole 341a communicates with the interior of the battery cell 30 and the gas channel, and after the gas in the battery cell 30 passes through the second through-hole 341a and flows into the gas channel, it passes through the first through-hole 343a to be discharged outside the battery cell 30.

The second through-hole 341a may be cylindrical or prismatic, or in another irregular shape.

It can be understood that the breathable member 342 may be disposed at an end of the second through-hole 341a close to the battery cell 30, at an end of the second through-hole 341a close to the gas channel, or certainly in a middle portion between two ends of the second through-hole 341a, which is not limited herein.

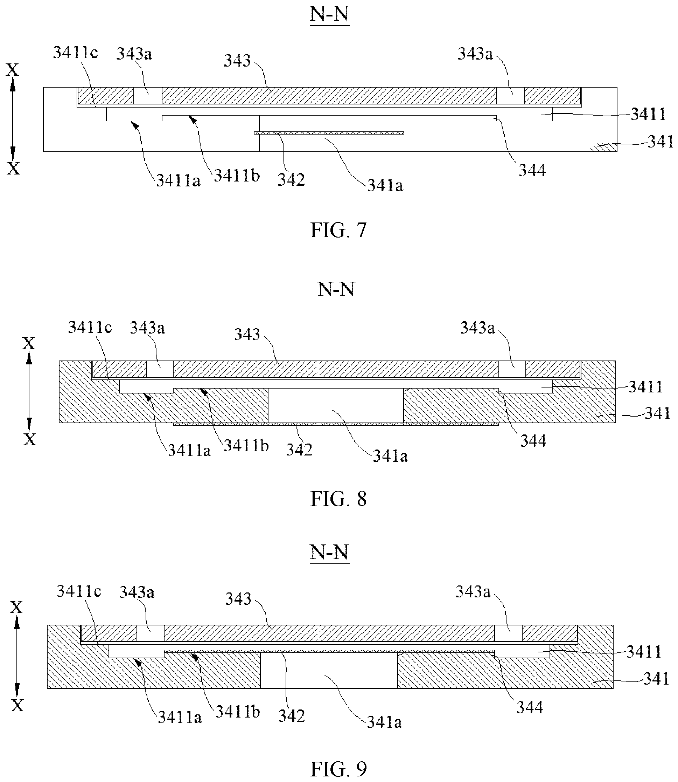

FIG. 6 is a schematic structural diagram of an end cover 33 and a degassing apparatus 34 in a battery cell 30 according to an embodiment of this application, and FIGs. 7 to 10 are schematic structural cross-sectional views along N-N in FIG. 6 according to different embodiments.

In some optional embodiments, as shown in FIG. 7, the breathable member 342 is at least partially accommodated in the second through-hole 341a, thus allowing the gas to directly flow into the gas channel via the breathable member 342.

Specifically, the breathable member 342 is located in the second through-hole 341a, and an edge of the breathable member 342 may overlap the wall of the second through-hole 341a or exceed the wall of the second through-hole 341a. For example, a groove may be provided in the second through-hole 341a and the periphery of the breathable member 342 is embedded into the second groove. Because the projection of the second through-hole 341a in the axial direction X and the projection of the first through-hole 343a in the axial direction X are staggered, a projection of a portion of the breathable member 342 in the second through-hole 341a in a circumferential direction is staggered with the projection of the first through-hole 343a in the axial direction X. This can still further reduce the risk of the external impurities of the battery cell 30 causing contamination and clogging of the breathable member 342, thus improving the safety of the battery cell 30 during operation.

In some other optional embodiments, as shown in FIGs. 8 and 9, the breathable member 342 covers the second through-hole 341a, thus allowing the gas to flow into the gas channel through the second through-hole 341a via the breathable member 342.

Because the breathable member 342 covers the second through-hole 341a, an area of the breathable member 342 is greater than a cross-sectional area of the second through-hole 341a, and the breathable member 342 is disposed at an end of the second through-hole 341a. Such arrangement can still protect the breathable member 342 and reduce the risk that the external impurities damage the breathable member 342 after entering the degassing apparatus 34.

In some embodiments, a surface of the degassing body 341 away from the electrode assembly 32 is provided with a depression 3411, where a bottom surface of the depression 3411 includes a first region 3411a and a second region 3411b, the first through-hole 343a and the first region 3411a are disposed opposite each other in the axial direction X, and the second through-hole 341a is disposed in the second region 3411b.

Through the provision of the depression 3411, the gas channel may be disposed in the depression 3411 without occupying a space outside the degassing body 341. Such arrangement can improve the structural compactness of the degassing apparatus 34.

As the bottom surface of the depression 3411 includes the first region 3411a and the second region 3411b, the first through-hole 343a and the first region 3411a are disposed opposite each other in the axial direction X, and the second through-hole 341a is disposed in the second region 3411b, the projection of the first through-hole 343a in the axial direction X does not overlap the projection of the second through-hole 341a in the axial direction X, thus reducing the possibility that the external impurities directly come into contact with the breathable member 342 after entering the degassing apparatus 34.

It can be understood that the protection member 343 may be disposed in the depression 3411 or outside the depression 3411, which is not limited herein.

In some optional embodiments, the depression 3411 is provided with a step, the protection member 343 is at least partially accommodated in the depression 3411, and a step surface 3411c is used to support the protection member 343.

Specifically, the provision of the step allows the protection member 343 to be partially or completely accommodated in the depression 3411, reducing the height by which the protection member 343 exceeds the surface of the degassing body 341, thus further improving the structural compactness of the degassing apparatus 34.

In some embodiments, a protrusion 344 is provided in the second region 3411b, the protrusion 344 surrounds the second through-hole 341a, and the protection member 343 is apart from the protrusion 344 in the axial direction X.

Specifically, as the protrusion 344 surrounds the second through-hole 341a, a cross-sectional area of an inner hole of the protrusion 344 is greater than or equal to a cross-sectional area of the second through-hole 341a. The shape of the protrusion 344 is not limited. For example, the protrusion 344 may be in a shape of a hollow column, a cylinder, or a prism.

Specifically, as the protrusion 344 is apart from the protection member 343 in the axial direction X, a portion of the gas channel is formed between the top surface of the protrusion 344 and the protection member 343, which is conducive to discharging the gas in the battery cell 30.

With the protrusion 344 provided in the second region 3411b, a portion, of the bottom surface of the depression 3411, between a side wall on a side of the protrusion 344 away from the second through-hole 341a and a side wall of the depression 3411 is the first region 3411a, and an outer wall on a side of the protrusion 344 away from the second through-hole 341a, the side wall of the depression 3411, and the first region 3411a jointly enclose a groove-shaped structure. In this way, after the impurities such as the gas and particles enter the degassing apparatus 34 through the first through-hole 343a, they are blocked by the protrusion 344 and stored in the first region 3411a, further reducing the possibility that the external impurities clog and contaminate the breathable member 342 after entering the second through-hole 341a.

The breathable member 342 may be disposed on the top surface of the protrusion 344 or in the protrusion 344. Such two arrangements can both achieve the objective of reducing the external impurities entering the second through-hole 341a.

In some optional embodiments, as shown in FIG. 9, the breathable member 342 is attached to the top surface of the protrusion 344.

Specifically, the breathable member 342 may be attached to the top surface of the protrusion 344 through bonding, snap-fitting, or threaded connection. For example, the breathable member 342 is attached to the top surface of the protrusion 344 through welding, and the breathable member 342 is welded to the protrusion 344, allowing for a small space occupied and more reliable connection between the two. It can be understood that the technical solution of attaching the breathable member 342 to the top surface of the protrusion 344 is more conducive to mounting the breathable member 342.

In some embodiments, the second through-hole 341a extends from the top surface of the protrusion 344 and runs through the degassing body 341.

In addition, the second through-hole 341a is flush with the edge of the inner hole of the protrusion 344. During processing, the protrusion 344 and the degassing body 341 may be integrally formed and subjected to some drilling processes to form the second through-hole 341a. Such arrangement is conducive to improving the processability of the degassing apparatus 34.

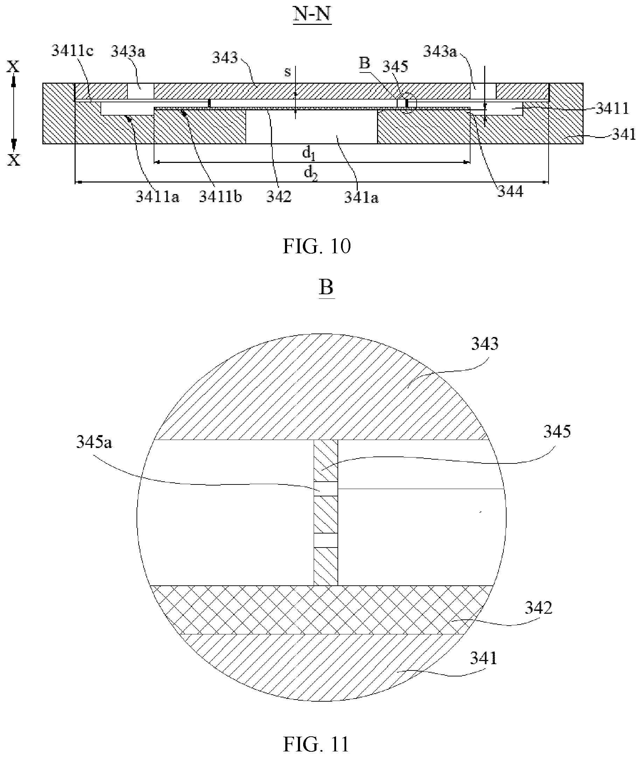

In some embodiments, as shown in FIGs. 10 and 11, the degassing apparatus 34 further includes a reinforcing member 345 sandwiched between the breathable member 342 and the protection member 343, the reinforcing member 345 is provided with a third through-hole 345a, and the third through-hole 345a communicates with the first through-hole 343a and the second through-hole 341a.

Specifically, the reinforcing member 345 may be of a block-shaped or sheet-shaped structure. For example, the reinforcing member 345 is of a pillar-shaped structure which is formed by a thin-sheet structure surrounding the second through-hole 341a on the top surface of the protrusion 344. The thin-sheet structure is provided with the third through-hole 345a in communication with the second through-hole 341a and the first through-hole 343a, so as to ensure the normal degassing from the battery cell 30.

It can be understood that the reinforcing member 345 being sandwiched between the protection member 343 and the breathable member 342 can improve stability of connection between the breathable member 342 and the top surface of the protrusion 344 and reduce the risk of functional failure of the breathable member 342 during operation of the battery cell 30.

A certain gap needs to be present between the breathable member 342 and the protection member 343, so as to serve as the gas channel of the degassing apparatus 34. The specific size of the gap is not limited.

In some optional embodiments, the gap s between the breathable member 342 and the protection member 343 satisfy 0.2 mm≤s≤0.8 mm.

Specifically, s may be 0.2 mm, 0.4 mm, 0.5 mm, 0.6 mm, 0.8 mm, or the like. The gap s satisfying the foregoing relationship can ensure smooth degassing from the battery cell 30 and avoid an excessively large gap between the breathable member 342 and the protection member 343, so as to ensure the structural compactness of the degassing apparatus 34.

It can be understood that a distance by which the protrusion 344 exceeds the bottom surface of the depression 3411 should not be excessively large or excessively small. This not only ensures that the protrusion 344 prevents the external impurities from entering the second through-hole 341a, but also ensures the structural compactness of the degassing apparatus 34.

In some embodiments, the height h by which the protrusion 344 exceeds the bottom surface of the depression 3411 satisfies 1 mm≤h≤1.5 mm.

Specifically, h may be 1 mm, 1.1 mm, 1.3 mm, 1.4 mm, 1.5 mm, or the like. h satisfying the foregoing relation allows the protrusion 344 to prevent the impurities from entering the second through-hole 341a and ensures the structural compactness of the degassing apparatus 34.

Because the first through-hole 343a and the breathable member 342 are staggered and the breathable member 342 is attached to the top surface of the protrusion 344, the first through-hole 343a and the protrusion 344 are staggered, for which the diameter of the protection member 343 needs to be greater than the outer diameter of the protrusion 344. To ensure the structural compactness of the degassing apparatus 34, the diameter of the protection member 343 should not be excessively greater than the outer diameter of the protrusion 344.

In some optional embodiments, the diameter d₁ of the protection member 343 and the outer diameter d₂ of the protrusion 344 satisfy 1<d₁/d₂≤2.5.

Specifically, d₁/d₂ may be 1.1, 1.5, 1.8, 2.0, 2.2, 2.4, 2.5, or the like. Such arrangement allows for a certain space reserved for the second region 3411b and ensures the structural compactness of the degassing apparatus 34.

A battery cell 30 according to an embodiment of this application includes a housing 31, an electrode assembly 32, an end cover 33, and the degassing apparatus 34 according to any one of the foregoing embodiments. The housing 31 has an opening 31a, and the electrode assembly 32 is accommodated in the housing 31. The end cover 33 covers the opening 31a of the housing 31. Specifically, the degassing apparatus 34 is disposed at the housing 31 or the end cover 33.

Specifically, the degassing apparatus 34 may be disposed on the housing 31 of the battery cell 30 or on the end cover 33, which is not limited herein.

In some embodiments, the degassing apparatus 34 is disposed on the end cover 33. For example, the degassing body 341 and a cover body 331 form an integral structure.

The battery cell 30 provided in this embodiment of this application includes the degassing apparatus 34 according to any one of the foregoing embodiments and therefore has the same technical effects, which is not described again herein.

A battery 10 according to an embodiment of this application includes the battery cell 30 provided in the foregoing embodiment.

An electric apparatus according to an embodiment of this application includes the battery 10 provided in the foregoing embodiment, where the battery 10 is configured to supply electrical energy.

Although this application has been described with reference to the preferred embodiments, various modifications can be made to this application without departing from the scope of this application and the components therein can be replaced with equivalents. In particular, as long as there is no structural conflict, the various technical features mentioned in some embodiments can be combined in any manner. This application is not limited to the specific embodiments disclosed in this specification, but includes all technical solutions falling within the scope of the claims.

## Claims

1. A degassing apparatus (34), for a battery cell (30), wherein the degassing apparatus (34) comprises:
a degassing body (341);
a breathable member (342) disposed at the degassing body (341); and
a protection member (343) disposed at the degassing body (341) and located on a side of the breathable member (342) back away from an electrode assembly (32) of the battery cell (30), wherein the protection member (343) is provided with a first through-hole (343a), and a gas channel in communication with the first through-hole (343a) is formed between the breathable member (342) and the protection member (343);
wherein the breathable member (342) is configured for gas to pass through when pressure of the gas in the battery cell (30) reaches a first threshold, such that the gas passes through the gas channel and the first through-hole (343a) to be discharged outside the battery cell (30); and
a projection of the first through-hole (343a) in an axial direction (X) and a projection of the breathable member (342) in the axial direction (X) are staggered, wherein the degassing body (341) is provided with a second through-hole (341a) in communication with the inside of the battery cell (30), a projection of the second through-hole (341a) in the axial direction (X) and the projection of the first through-hole (343a) in the axial direction (X) are staggered, wherein a surface of the degassing body (341) back away from the electrode assembly (32) is provided with a depression (3411), a bottom surface of the depression (3411) comprises a first region (3411a) and a second region (3411b), the first through-hole (343a) and the first region (3411a) are disposed opposite each other in the axial direction (X), and the second through-hole (341a) is disposed in the second region (3411b),
**characterised in that** a protrusion (344) is provided in the second region (3411b), the protrusion (344) surrounds the second through-hole (341a), and the protection member (343) is apart from the protrusion (344) in the axial direction (X).

2. The degassing apparatus (34) according to claim 1, wherein the breathable member (342) is at least partially accommodated in the second through-hole (341a), allowing the gas to directly flow into the gas channel via the breathable member (342).

3. The degassing apparatus (34) according to claim 1, wherein the breathable member (342) covers the second through-hole (341a), allowing the gas to flow into the gas channel through the second through-hole (341a) via the breathable member (342).

4. The degassing apparatus (34) according to claim 1, wherein the depression (3411) is provided with a step surface (3411c), the protection member (343) is at least partially accommodated in the depression (3411), and the step surface (3411c) is used to support the protection member (343).

5. The degassing apparatus (34) according to claim 1 or 4, wherein the breathable member (342) is attached to a top surface of the protrusion (344).

6. The degassing apparatus (34) according to claim 1, wherein the second through-hole (341a) extends from the top surface of the protrusion (344) and runs through the degassing body (341).

7. The degassing apparatus (34) according to claim 1 or 6, wherein the degassing apparatus (34) further comprises a reinforcing member (345) sandwiched between the breathable member (342) and the protection member (343), the reinforcing member (345) is provided with a third through-hole (345a), and the third through-hole (345a) communicates with the first through-hole (343a) and the second through-hole (341a).

8. The degassing apparatus (34) according to any one of claims 1 to 7, wherein a gap s between the breathable member (342) and the protection member (343) satisfies 0.2 mm≤s≤0.8 mm; and/or
a height h by which the protrusion (344) exceeds the bottom surface of the depression (3411) satisfies 1 mm≤h≤1.5 mm; and/or
a diameter d₁ of the protection member (343) and an outer diameter d₂ of the protrusion (344) satisfy 1<d₁/d₂≤2.5.

9. A battery cell (30), comprising:
a housing (31) with an opening (31a);
an electrode assembly (32) accommodated in the housing (31);
an end cover (33) covering the opening (31a) of the housing (31); and
the degassing apparatus (34) according to any one of claims 1 to 8, the degassing apparatus (34) being disposed at the housing (31) or end cover (33).

10. A battery (10), comprising the battery cell (30) according to claim 9.

11. An electric apparatus, comprising the battery (10) according to claim 10, wherein the battery (10) is configured to supply electrical energy.

## Patentansprüche

1. Entgasungsvorrichtung (34) für ein Batteriezellelement (30), wobei die Entgasungsvorrichtung (34) umfasst:
einen Entgasungskörper (341);
ein luftdurchlässiges Element (342), das am Entgasungskörper (341) angeordnet ist; und
ein Schutzelement (343), das am Entgasungskörper (341) angeordnet ist und sich auf einer Seite des luftdurchlässigen Elements (342) befindet, die gegenüber einer Elektrodenanordnung (32) des Batteriezellelements (30) zurückgesetzt ist, wobei das Schutzelement (343) mit einer ersten Durchgangsöffnung (343a) versehen ist, und wobei zwischen dem luftdurchlässigen Element (342) und dem Schutzelement (343) ein mit der ersten Durchgangsöffnung (343a) in Verbindung stehender Gaskanal ausgebildet ist;
wobei das luftdurchlässige Element (342) so ausgelegt ist, dass Gas hindurchtritt, wenn der Gasdruck im Batteriezellelement (30) einen ersten Schwellenwert erreicht, sodass das Gas durch den Gaskanal und die erste Durchgangsöffnung (343a) hindurch nach außen aus dem Batteriezellelement (30) abgeführt wird; und
wobei ein Vorsprung der ersten Durchgangsöffnung (343a) in einer axialen Richtung (X) und ein Vorsprung des luftdurchlässigen Elements (342) in der axialen Richtung (X) zueinander versetzt sind, wobei der Entgasungskörper (341) mit einer zweiten Durchgangsöffnung (341a) versehen ist, die mit dem Inneren des Batteriezellelements (30) in Verbindung steht, wobei ein Vorsprung der zweiten Durchgangsöffnung (341a) in der axialen Richtung (X) und der Vorsprung der ersten Durchgangsöffnung (343a) in der axialen Richtung (X) zueinander versetzt sind, wobei eine gegenüber der Elektrodenanordnung (32) zurückgesetzte Oberfläche des Entgasungskörpers (341) mit einer Vertiefung (3411) versehen ist, wobei eine Bodenfläche der Vertiefung (3411) eine erste Region (3411a) und eine zweite Region (3411b) umfasst, wobei die erste Durchgangsöffnung (343a) und die erste Region (3411a) in der axialen Richtung (X) einander gegenüberliegend angeordnet sind, und wobei die zweite Durchgangsöffnung (341a) in der zweiten Region (3411b) angeordnet ist,
**dadurch gekennzeichnet, dass**
in der zweiten Region (3411b) ein Vorsprung (344) vorgesehen ist, wobei der Vorsprung (344) die zweite Durchgangsöffnung (341a) umgibt, und wobei das Schutzelement (343) in der axialen Richtung (X) von dem Vorsprung (344) beabstandet ist.

2. Entgasungsvorrichtung (34) nach Anspruch 1, wobei das luftdurchlässige Element (342) zumindest teilweise in der zweiten Durchgangsöffnung (341a) aufgenommen ist, sodass Gas unmittelbar über das luftdurchlässige Element (342) in den Gaskanal strömen kann.

3. Entgasungsvorrichtung (34) nach Anspruch 1, wobei das luftdurchlässige Element (342) die zweite Durchgangsöffnung (341a) überdeckt, sodass Gas durch die zweite Durchgangsöffnung (341a) hindurch über das luftdurchlässige Element (342) in den Gaskanal strömen kann.

4. Entgasungsvorrichtung (34) nach Anspruch 1, wobei die Vertiefung (3411) mit einer abgestuften Oberfläche (3411c) versehen ist, wobei das Schutzelement (343) zumindest teilweise in der Vertiefung (3411) aufgenommen ist und wobei die abgestufte Oberfläche (3411c) zur Abstützung des Schutzelements (343) dient.

5. Entgasungsvorrichtung (34) nach Anspruch 1 oder 4, wobei das luftdurchlässige Element (342) an einer oberen Oberfläche des Vorsprungs (344) befestigt ist.

6. Entgasungsvorrichtung (34) nach Anspruch 1, wobei sich die zweite Durchgangsöffnung (341a) von der oberen Oberfläche des Vorsprungs (344) aus erstreckt und sich durch den Entgasungskörper (341) hindurch erstreckt.

7. Entgasungsvorrichtung (34) nach Anspruch 1 oder 6, wobei die Entgasungsvorrichtung (34) ferner ein Verstärkungselement (345) umfasst, das zwischen dem luftdurchlässigen Element (342) und dem Schutzelement (343) angeordnet ist, wobei das Verstärkungselement (345) mit einer dritten Durchgangsöffnung (345a) versehen ist und wobei die dritte Durchgangsöffnung (345a) mit der ersten Durchgangsöffnung (343a) und der zweiten Durchgangsöffnung (341a) in Verbindung steht.

8. Entgasungsvorrichtung (34) nach einem der Ansprüche 1 bis 7, wobei ein Abstand s zwischen dem luftdurchlässigen Element (342) und dem Schutzelement (343) die Bedingung
0,2 mm ≤ s ≤ 0,8 mm erfüllt; und/oder
eine Höhe h, um die der Vorsprung (344) über die Bodenfläche der Vertiefung (3411) hinausragt, die Bedingung
1 mm ≤ h ≤ 1,5 mm erfüllt; und/oder
ein Durchmesser d1 des Schutzelements (343) und ein Außendurchmesser d2 des Vorsprungs (344) die Bedingung
1 < d1/d2 ≤ 2,5 erfüllen.

9. Batteriezellelement (30), umfassend:
ein Gehäuse (31) mit einer Öffnung (31a);
eine im Gehäuse (31) aufgenommene Elektrodenanordnung (32);
einen Enddeckel (33), der die Öffnung (31a) des Gehäuses (31) abdeckt; und
die Entgasungsvorrichtung (34) nach einem der Ansprüche 1 bis 8, wobei die Entgasungsvorrichtung (34) am Gehäuse (31) oder am Enddeckel (33) angeordnet ist.

10. Batterie (10), umfassend das Batteriezellelement (30) nach Anspruch 9.

11. Elektrisches Gerät, umfassend die Batterie (10) nach Anspruch 10, wobei die Batterie (10) zur Bereitstellung elektrischer Energie ausgelegt ist.

## Revendications

1. Appareil de dégazage (34), pour un élément de batterie (30), dans lequel l'appareil de dégazage (34) comprend :
un corps de dégazage (341) ;
un élément perméable à l'air (342) disposé sur le corps de dégazage (341) ; et
un élément de protection (343) disposé sur le corps de dégazage (341) et situé sur un côté de l'élément perméable à l'air (342) en retrait par rapport à un ensemble d'électrodes (32) de l'élément de batterie (30), dans lequel l'élément de protection (343) est pourvu d'un premier trou traversant (343a), et un canal de gaz en communication avec le premier trou traversant (343a) est formé entre l'élément perméable à l'air (342) et l'élément de protection (343) ;
dans lequel l'élément perméable à l'air (342) est configuré pour que le gaz passe au travers lorsque la pression du gaz dans l'élément de batterie (30) atteint un premier seuil, de telle sorte que le gaz passe à travers le canal de gaz et le premier trou traversant (343a) pour être évacué à l'extérieur de l'élément de batterie (30) ; et
une saillie du premier trou traversant (343a) dans une direction axiale (X) et une saillie de l'élément perméable à l'air (342) dans la direction axiale (X) sont décalées, dans lequel le corps de dégazage (341) est pourvu d'un deuxième trou traversant (341a) en communication avec l'intérieur de l'élément de batterie (30), une saillie du deuxième trou traversant (341a) dans la direction axiale (X) et la saillie du premier trou traversant (343a) dans la direction axiale (X) sont décalées, dans lequel une surface de corps de dégazage (341) en retrait par rapport à l'ensemble d'électrodes (32) est pourvu d'une dépression (3411), une surface inférieure de la dépression (3411) comprend une première région (3411a) et une deuxième région (3411b), le premier trou traversant (343a) et la première région (3411a) sont disposés à l'opposé l'un de l'autre dans la direction axiale (X), et le deuxième trou traversant (341a) est disposé dans la deuxième région (3411b),
**caractérisé en ce que**
une saillie (344) est prévue dans la deuxième région (3411b), la saillie (344) entoure le deuxième trou traversant (341a), et l'élément de protection (343) est espacé de la saillie (344) dans la direction axiale (X).

2. Appareil de dégazage (34) selon la revendication 1, dans lequel l'élément perméable à l'air (342) est logé au moins en partie dans le deuxième trou traversant (341a), permettant au gaz de s'écouler directement dans le canal de gaz par l'intermédiaire de l'élément perméable à l'air (342).

3. Appareil de dégazage (34) selon la revendication 1, dans lequel l'élément perméable à l'air (342) recouvre le deuxième trou traversant (341a), permettant au gaz de s'écouler dans le canal de gaz à travers le deuxième trou traversant (341a) par l'intermédiaire de l'élément perméable à l'air (342).

4. Appareil de dégazage (34) selon la revendication 1, dans lequel la dépression (3411) est pourvue d'une surface étagée (3411c), l'élément de protection (343) est logé au moins en partie dans la dépression (3411), et la surface étagée (3411c) est utilisée pour supporter l'élément de protection (343).

5. Appareil de dégazage (34) selon la revendication 1 ou 4, dans lequel l'élément perméable à l'air (342) est fixé à une surface supérieure de la saillie (344).

6. Appareil de dégazage (34) selon la revendication 1, dans lequel le deuxième trou traversant (341a) s'étend depuis la surface supérieure de la saillie (344) et s'étend à travers le corps de dégazage (341).

7. Appareil de dégazage (34) selon la revendication 1 ou 6, dans lequel l'appareil de dégazage (34) comprend en outre un élément de renforcement (345) pris en sandwich entre l'élément perméable à l'air (342) et l'élément de protection (343), l'élément de renforcement (345) est pourvu d'un troisième trou traversant (345a), et le troisième trou traversant (345a) communique avec le premier trou traversant (343a) et le deuxième trou traversant (341a).

8. Appareil de dégazage (34) selon l'une quelconque des revendications 1 à 7, dans lequel un espace s entre l'élément perméable à l'air (342) et l'élément de protection (343) satisfait à 0,2 mm ≤ s ≤ 0,8 mm ; et/ou
une hauteur h à laquelle la saillie (344) dépasse la surface inférieure de la dépression (3411) satisfait à 1 mm ≤ h ≤ 1,5 mm ; et/ou
un diamètre d₁ de l'élément de protection (343) et un diamètre extérieur d₂ de la saillie (344) satisfait à 1 < d₁/d₂ ≤2,5.

9. Elément de batterie (30), comprenant :
un boîtier (31) avec une ouverture (31a) ;
un ensemble d'électrodes (32) logé dans le boîtier (31) ;
un couvercle d'extrémité (33) recouvrant l'ouverture (31a) du boîtier (31) ; et
l'appareil de dégazage (34) selon l'une quelconque des revendications 1 à 8, l'appareil de dégazage (34) étant disposé sur le boîtier (31) ou le couvercle d'extrémité (33).

10. Batterie (10), comprenant l'élément de batterie (30) selon la revendication 9.

11. Appareil électrique, comprenant la batterie (10) selon la revendication 10, dans lequel la batterie (10) est configurée pour fournir de l'énergie électrique.
